# DEMANDE DE BREVET EUROPEEN

(11) **EP 0 739 865 A1**
(43) Date de publication de la demande: **30.10.1996**
(21) Numéro de dépôt: 95106092.0
(22) Date de dépôt: 24.04.1995
(51) Int. Cl.: C04B 35/486, C04B 35/64, C22B 4/00, C22C 1/10

(54) **Article à base de zircone fritté et procédé d'obtention d'un tel article**

(71) Demandeur: ASULAB S.A., CH-2501 Bienne (CH)
(72) Inventeur: Magnin, Pierre, CH-1052 Mont-sur-Lausanne (CH)
(74) Mandataire: Patry, Didier Marcel Pierre

(57) **Abrégé**

L'invention concerne un article en zircone fritté ayant un aspect métallique comprenant essentiellement une zircone à configuration cristallographique tétragonale dont une partie des atomes de zirconium se trouvent dans l'état d'oxydation zéro, lesdits atomes de zirconium faisant partie intégrante dudit réseaux cristallographique tétragonale.

## Description

La présente invention concerne un article en zircone fritté et en particulier un tel article ayant un aspect métallique destiné notamment à être utilisé dans des applications décoratives. La présente invention concerne aussi un procédé d'obtention d'un tel article.

Parmi tous les matériaux connus, les métaux sont très largement utilisés à cause de leurs propriétés très intéressantes : grande résistance mécanique, ténacité élevée, conductivité électrique etc. En outre, leur éclat caractéristique est très recherché pour les applications décoratives. Leur dureté est toutefois inférieure à celle des céramiques, ce qui peut conduire à une usure importante dans de nombreuses conditions d'utilisation courante, par exemple lorsque ces matériaux sont utilisés pour réaliser des pièces d'habillage d'horlogerie comme des boîte de montre.

Pour cette raison, on a depuis longtemps cherché à augmenter la dureté des métaux. Les procédés de métallurgie traditionnelle (trempe, durcissement structural) ne permettent pas d'atteindre les très grandes duretés, supérieures à 1000 HV (dureté Vickers) nécessaires pour certaines applications, telles que celles aux outils de coupe ou à des pièces décoratives inrayables.

Pour ces applications, on a cherché à augmenter encore la dureté des métaux par addition de particules très dures, en réalisant des composites biphasés constitués d'une phase métallique enrobant des particules dures, qui occupent fréquemment la majeure partie du volume du matériau. Un certain nombre de matériaux de ce type ont été développés et sont aujourd'hui communément utilisés à l'échelon industriel. On les nomme généralement "métal dur" lorsque les particules dures utilisées sont constituées de carbure de tungstène, et "cermet" lorsqu'elles sont en carbonitrure de titane.

Tous ces matériaux ont toutefois en commun le fait qu'ils comportent une phase métallique distincte, qui peut limiter leur résistance à la corrosion et leurs propriétés mécaniques à haute température.

De plus, cette phase métallique contient toujours du nickel ou du cobalt, toutes les tentatives pour substituer d'autres métaux à ces éléments ayant jusqu'ici échoué. Toutefois, l'utilisation de cette phase métallique avec le nickel et le cobalt, dans des applications qui conduisent à un contact prolongé avec la peau, comme par exemple les applications dans l'horlogerie et la bijouterie, doit être évitée car ces éléments sont connus pour provoquer fréquemment des allergies.

Enfin, ces matériaux sont généralement difficiles à mettre en forme, ce qui constitue une limitation importante lors de la fabrication de pièces d'habillage pour l'horlogerie ou de pièces de bijouterie - de formes souvent complexes - et rend leur coût très élevé.

L'invention a donc pour but de remédier à tous ces inconvénients en fournissant un article présentant toutes les propriétés des pièces en céramiques conventionnelles (dureté, facilité de mise en forme, absence d'effet allergène etc.) tout en présentant l'éclat des pièces métalliques.

A cet effet, l'invention a pour objet un article en zircone fritté ayant un aspect métallique comprenant essentiellement une zircone à configuration cristallographique tétragonale dont une partie des atomes de zirconium se trouvent dans l'état d'oxydation zéro, lesdits atomes de zirconium faisant partie intégrante dudit réseau cristallographique tétragonale.

Selon un mode de réalisation de l'invention, les atomes de zirconium à l'état d'oxydation zéro représentent entre 10 et 50%, et de préférence 35% du total des atomes de zirconium de la zircone.

L'invention a également pour objet un procédé d'obtention d'un article en zircone fritté fini ou semi-finie ayant un aspect métallique, caractérisé en ce qu'il comprend les étapes consistant à:
- se munir d'au moins un article en zircone préalablement conformé dans sa forme finie ou semi-fini;
- disposer ledit article dans un four à plasma dans lequel règne une atmosphère d'hydrogène;
- amener ledit article à une température d'environ 800^{o}C; et
- maintenir ledit article à cette température pendant environ une heure.

L'approche pour réaliser de tels article est fondamentalement nouvelle. En effet, on a commencé par réaliser selon la technologie traditionnelle une pièce en céramique conventionnelle présentant toutes les propriétés recherchées, mais sans caractère métallique puis on a appliqué ensuite à cette pièce un traitement destiné à modifier fondamentalement la répartition des électrons dans la céramique, sans modifier son réseau cristallin de manière significative.

Ce dernier point est essentiel, car il est la condition nécessaire pour conserver les propriétés mécaniques du matériau, qui dépendent de son réseau cristallin. En revanche, le matériau a ainsi acquis des propriétés nouvelles liées à la nouvelle répartition électronique.

En particulier, il semble que les opérations du procédé décrit ci-dessus ont conduit à la présence d'un nuage d'électrons libres ou faiblement liés si bien que le matériau a acquis certaines propriétés des métaux, notamment leur conductibilité électrique et leur éclat métallique.

A la grande différence des "métaux durs" et des "cermets" existants, les article en zircone selon l'invention présentent uniquement certaines caractéristiques des métaux, mais ils sont parfaitement homogènes et ne contiennent pas de phase métallique.

Un exemple de réalisation d'un article en zircone fritté ayant un aspect métallique avec son procédé d'obtention selon l'invention va maintenant être décrit dans ce qui suit.

A titre d'exemple, on se muni d'un article en zircone ayant une configuration cristallographique tétragonale (oxyde de zirconium, ZrO₂) de couleur blanche et qui est réalisé selon les techniques usuelles de fabrication d'articles en céramique, par exemple par frittage.

Cet article peut être un produit fini ayant sa forme finale dans laquelle il va être utilisé, par exemple une pièce de forme générale parallélépipédique destinée à constituée un élément de bracelet de montre.

Bien entendu, le cas échéant l'article peut être un produit semi-fini sur lequel des opérations d'usinage ultérieures peuvent être réalisées afin de les adapter à son utilisation finale.

Cet article est ensuite chauffé à 800^{o}C et plongé pendant un temps compris entre une et trois heures, et de préférences deux heures, dans un plasma d'hydrogène, obtenu par exemple à l'aide d'un filament chaud ou d'un générateur de micro-ondes.

Après cette dernière opération, l'article présente un bel aspect et un éclat métalliques, qui ne résulte pas d'une modification superficielle, mais qui résulte d'une transformation à coeur du matériau.

Cet aspect métallique est lié à la profonde modification de la répartition des électrons produite au cours du procédé de l'invention. Des mesures de résistivité électrique effectuées avec un article en zircone fritté de 17 x 6 x 3 mm montrent qu'après traitement sa résistance électrique est de 200 Ω environ, alors que le même barreau avant traitement est parfaitement isolant et présente une résistance électrique supérieure à 200 MΩ. Cela confirment donc la modification de la répartition des électrons produite au cours du procédé de l'invention.

De plus, les analyses ESCA indiquent qu'une quantité importante, un tiers environ, des atomes de zirconium contenus dans la céramique ne se trouve plus à l'état d'oxydation +4 (comme dans la ZrO₂ normale), mais à l'état d'oxydation 0 (comme dans le métal). On suppose donc que des électrons provenant de ces atomes forment un nuage d'électrons libres (ou faiblement liés) responsables des caractéristiques métalliques du matériau produit.

On notera aussi que le spectre obtenu par analyse aux rayons X reste inchangé après le traitement, indiquant que la structure cristallographique normale de la zircone tétragonale est conservée, aucune autre structure (en particulier celle du zirconium métallique) n'étant mise en évidence.

De plus, des mesures très précises (meilleures que 0.01 %) indiquent que le procédé de l'invention ne provoque aucune variation de poids décelable. Ce dernier point confirme que le procédé de l'invention est de nature fondamentalement différente des traitements réducteurs bien connus, qui s'accompagnent d'une perte d'atomes d'oxygène (la réduction d'un tiers des atomes de zirconium de l'état d'oxydation +4 à l'état d'oxydation 0 par traitement réducteur conventionnel s'accompagnerait d'une perte de poids de 10 % environ). Dans les limites de sensibilité des analyses effectuées (∼ 1 %), il n'y a pas d'atomes d'hydrogène inclus dans la structure au cours du traitement.

L'absence de modification de la structure cristallographique est confirmée par le fait que les propriétés mécaniques restent inchangées après traitement, et les observations au microscope électronique à balayage montrent que le matériau obtenu est homogène.

Bien que le mécanisme exact du procédé ne soit pas encore totalement expliqué, toutes les analyses effectuées indiquent que le procédé de l'invention conduit à une modification profonde de la distribution des électrons dans le matériau de l'article, sans qu'aucune modification de quelque nature que ce soit du réseau cristallin ait pu être mise en évidence, malgré des analyses poussées. Ce procédé - fondamentalement différent de tous les procédés en milieu réducteur connus jusqu'à présent - permet de réaliser un article homogène cumulant certaines des caractéristiques des céramiques et des métaux, sans qu'aucune phase métallique ne soit présente.

Il est ainsi possible d'obtenir des articles d'une grande dureté présentant un aspect et un éclat métalliques particulièrement esthétiques, faciles à mettre en forme et non susceptibles de provoquer des réactions allergiques. De la sorte, ces articles sont parfaitement adapter à des utilisation en tant qu'articles décoratifs et en particulier en tant qu'élément de construction de bracelet ou de boîte pour pièce d'horlogerie.

## Revendications

1. Article en zircone fritté ayant un aspect métallique comprenant essentiellement une zircone à configuration cristallographique tétragonale dont une partie des atomes de zirconium se trouvent dans l'état d'oxydation zéro, lesdits atomes de zirconium faisant partie intégrante dudit réseaux cristallographique tétragonale.

2. Article en zircone selon la revendication 1, caractérisé en ce que lesdits atomes de zirconium à l'état d'oxydation zéro représentent entre 10 et 50% du total des atomes de zirconium de la zircone.

3. Article en zircone selon la revendication 2, caractérisé en ce que lesdits atomes de zirconium à l'état d'oxydation zéro représentent environ 35% du total des atomes de zirconium de la zircone.

4. Utilisation de l'article en zircone selon l'une des revendications précédentes en tant qu'article décoratif.

5. Utilisation de l'article en zircone selon la revendication 4 en tant qu'élément de construction de bracelet ou de boîte pour pièce d'horlogerie.

6. Procédé d'obtention d'un article en zircone fritté fini ou semi-fini ayant un aspect métallique, caractérisé en ce qu'il comprend les étapes consistant à:
- se munir d'au moins un article en zircone préalablement conformé dans sa forme finie ou semi-finie;
- disposer ledit article dans un four à plasma dans lequel règne une atmosphère d'hydrogène;
- amener ledit article à une température d'environ 800^{o}C; et
- maintenir ledit article à cette température pendant un temps d'environ une heure à trois heures et de préférence deux heures.
